# EUROPEAN PATENT APPLICATION

(11) **EP 1 234 735 A1**
(43) Date of publication of application: **28.08.2002**
(21) Application number: 01850040.5
(22) Date of filing: 27.02.2001
(51) Int. Cl.: B60R 25/10, G01S 3/04

(54) **A portable apparatus for locating a parked vehicle**

(71) Applicant: Telefonaktiebolaget L M Ericsson (Publ), 126 25 Stockholm (SE)
(72) Inventor: Hermansson, Jonas, 168 56 Bromma (SE)
(74) Representative: Karlsson, Leif Karl Gunnar

(57) **Abstract**

The present invention relates to a portable apparatus (10) operable to help a user to find e.g. a parked vehicle. The apparatus (10) comprises a position determination means (12) operable to determine and store at least one position, and a to said position determination means (12) connected display means (14) operable to display geographic information. The apparatus (10) also comprises a to said position determination means (12) connected detection means (16) operable to automatically detect when said apparatus (10) is removed from said vehicle, whereby said position determination means (12) determines and stores said detection position apparatus (10), and said detection position can be displayed in the form of geographic information on said display means (14).

## Description

### Technical Field of the Invention

The present invention relates in a first aspect to a portable apparatus operable to help a user to find e.g. a parked vehicle.

In a second aspect the present invention relates to a method for helping a user to find e.g. a parked vehicle.

In a third aspect the present invention relates to at least one computer program product for helping a user to find e.g. a parked vehicle.

### Description of related art

Today it is becoming very common with very big parking lots or garage buildings. This means that the problem of finding your ownparked car has increased. It can be very difficult to remember where you parked the car, especially where each parking space not is marked in some way.

The document DE-A1-1 99 23 750 discloses a device to help finding ones car after it has been left in a strange place or in an area where the driver is not at home. The device comprises a mobile terminal independent of a vehicle. The mobile terminal includes a memory, while a data transfer device on board the vehicle is linked to a navigation system storing position data of the vehicle. The data transfer device could send a message to a vehicle driver's mobile terminal when he/she is in the neighbourhood of the car. The mobile terminal could then display vehicle co-ordinates.

One drawback with this solution is that each vehicle has to be equipped with a navigation system to be able to be found. If a vehicle is not equipped with a navigation system it can not be found with this solution. This often precludes the possibility of using this solution in connection with older vehicles. Another drawback with this solution is that it is rather expensive, at least at the moment.

Another drawback with this solution is that you have to know your own position on the map.

### Summary of the invention

It is an object of the present invention to solve the above mentioned problems. It is also an object of the invention to provide a very convenient way for a user to find the position of a parked vehicle.

According to the present invention there is provided in a first aspect a portable apparatus operable to help a user to find e.g. a parked vehicle. The apparatus comprises a position determination means operable to determine and store at least one position. The apparatus also comprises a to said position determination means connected display means operable to display geographic information. The apparatus also comprises a to said position determination means connected detection means operable to automatically detect when said apparatus is removed from said vehicle. The position determination means determines and stores said detection position of said apparatus, and said detection position can be displayed in the form of geographic information on said display means. This apparatus makes it very convenient for a user to find the position of his/her parked vehicle. The apparatus according to the present invention limits the need for complex input from the user. This is very useful in small apparatus with limited input capabilities. The apparatus according to the present invention is very user friendly.

A further advantage in this context is achieved if said apparatus also comprises a to said position determination means connected navigational device operable to provide the closest or quickest route between at least two different positions, wherein said apparatus retrieves the detection position and a current position of said apparatus from said position determination, to, with the aid of said navigational device, provide geographic information based on said detection position and said current position.

Furthermore, it is an advantage in this context if said position determination means comprises a receiver for a satellite based navigation system, and said detectionposition and said current position are determined with the aid of said navigation system.

A further advantage in this context is achieved if said navigation system is the Global Positioning System and said receiver is a GPS receiver.

Furthermore, it is an advantage in this context if said position determination means comprises a PLMN transmitter and receiver, and said detection position and said current position are determined with the aid of at least three base stations.

A further advantage in this context is achieved if said position determination means comprises a radio transmitting and receiving device using low power, and said detection position and said current position are determined with the aid of at least one radio base station using low power.

Furthermore, it is an advantage in this context if said position determination means comprises a radio transmitting and receiving device, and said position (s) is/are determined with the aid of a radio local area network.

A further advantage in this context is achieved if said detection means is a mechanical detection means operable to automatically detect when said apparatus is removed from a cradle in said vehicle.

Furthermore, it is an advantage in this context if said detection means is an electrical detection means operable to automatically detect when said apparatus is removed from a cradle in said vehicle.

A further advantage in this context is achieved if said detection means is a radio based detection means operable to detect when the signal strength of a signal received from a radio transmitting means in said vehicle is below a predetermined threshold value.

Furthermore, it is an advantage in this context if said apparatus is in the form of a mobile telephone, a mobile communicator, a personal digital assistant, a handheld computer, a navigation equipment, or a portable computer.

A further advantage in this context is achieved if said geographic information is displayed in the form of a route between two positions, a map with or without overlays, text based instructions, or icons indicating turns.

Furthermore, it is an advantage in this context if said geographic information is presented in the form of spoken commands.

Another object of the invention is to provide a method for helping a user to find e.g. a parked vehicle, with the aid of a portable apparatus. The method comprises the following steps:
- with the aid of said apparatus, to automatically detect when said apparatus is removed from said vehicle;
- with the aid of a position determination means comprised in said apparatus, to determine a position of said apparatus upon said detection;
- to store said detection position; and
- on demand, to provide and output geographic information based on said position. This method makes it very convenient for a user to find the position of his/her parked vehicle. The method according to the present invention limits the need for complex input from the user. This is very useful in small apparatus with limited input capabilities. The method according to the present invention is very user friendly.

A further advantage in this context is achieved if said method also comprises the steps of:
- to retrieve, with a navigational function comprised in said apparatus, said detection position and a current position of said apparatus from said position determination means; and
- with the aid of said navigational function to automatically provide geographic information based on said detection position and said current position.

Furthermore, it is an advantage in this context if said position determination means comprises a receiver for a satellite based navigation system, and said steps to determine said detection position and said current position are performed with the aid of said navigation system.

A further advantage in this context is achieved if said navigation system is the Global Positioning System and said receiver is a GPS receiver.

Furthermore, it is an advantage in this context if said position determination means comprises a PLMN transmitter and receiver, and said steps to determine said detection position and said current position are performed with the aid of at least three base stations.

A further advantage in this context is achieved if said position determination means comprises a radio transmitting and receiving device using low power, and said steps to determine said detection position and said current position are performed with the aid of at least one radio base station using low power.

Furthermore, it is an advantage in this context if said position determination means comprises a radio transmitting and receiving device, and said steps to determine said detection position and said current position are performed with the aid of a radio local area network.

A further advantage in this context is achieved if said detection step is performed by mechanical detection when said apparatus is removed from a cradle in said vehicle.

Furthermore, it is an advantage in this context if said detection step is performed by electrical detection when said apparatus is removed from a cradle in said vehicle.

A further advantage in this context is achieved if said detection step is performed by radio based detection, wherein the method comprises the steps of:
- to detect when the signal strength of a signal received from a radio transmitting means in said vehicle is below a predetermined threshold value.

Furthermore, it is an advantage in this context if said apparatus is in the form of a mobile telephone, a mobile communicator, a personal digital assistant, a handheld computer, a navigation equipment, or a portable computer.

A further advantage in this context is achieved if said geographic information is displayed in the form of a route between two positions, a map with or without overlays, text based instructions, or icons indicating turns.

Furthermore, it is an advantage in this context if said geographic information is presented in the form of spoken commands.

Another object of the invention is to provide at least one computer product directly loadable into the internal memory of at least one digital computer. The at least one computer program product comprises software code portions for performing the steps of the method according to the present invention when said at least one product is/are run on said at least one computer. The computer program product(s) according to the present invention makes it very convenient for a user to find his/her parked vehicle. It also limits the need for complex input from the user. To use said at least one computer program product according to the present invention becomes very user friendly.

It should be emphasised that the term "comprises/comprising" when used in this specification is taken to specify the presence of stated features, steps or components but does not preclude the presence of one or more other features; integers, steps, components or groups thereof.

Embodiments of the invention will now be described with a reference to the accompanying drawings, in which:

### Brief description of the drawings

- Figure 1: shows a block diagram of a portable apparatus operable to help a user to find e.g. a parked vehicle according to the present invention;
- Figure 2: shows a schematic diagram of one embodiment of a portable apparatus according to the present invention;
- Figure 3: shows an elevational view of an example of a cradle which can be used in connection with the portable apparatus disclosed in figure 2;
- Figure 4: shows a side view of the cradle disclosed in figure 3;
- Figure 5: shows another side view of the cradle disclosed in figure 3 when a portable apparatus according to the present invention is placed in said cradle;
- Figure 6: is a flow chart of a method for helping a user to find e.g. a parked vehicle according to the present invention.
- Figure 7: shows a schematic diagram of a typical GPS positioning system; and
- Figure 8: shows a schematic diagram of some computer program product according to the present invention.

### Detailed description of the embodiments

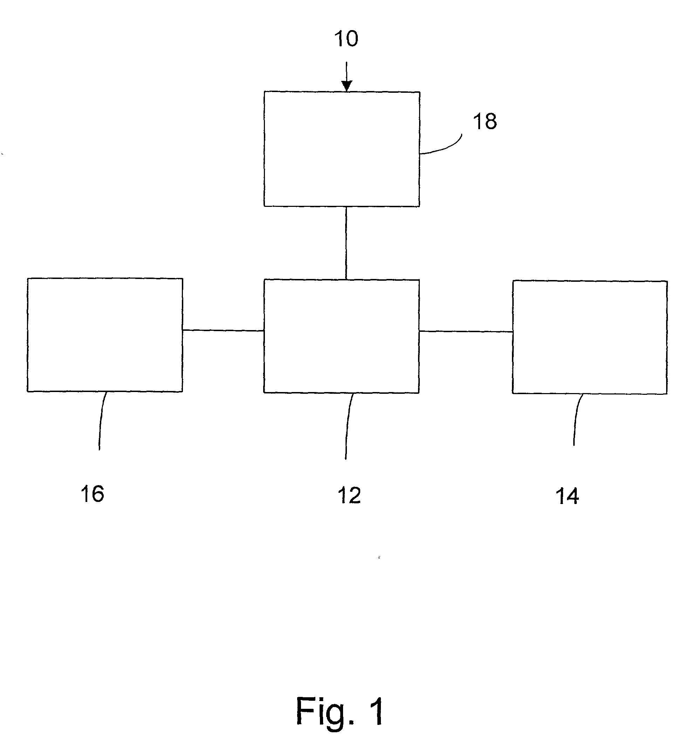

In figure 1 there is disclosed a block diagram of a portable apparatus 10 operable to help a user to find e.g. a parked vehicle according to the present invention. The apparatus 10 comprises a position determination means 12 operable to determine and store at least one position. The apparatus 10 also comprises a to said position determination means 12 connected display means 14 operable to display geographic information. The apparatus 10 also comprises a to said position determination means 12 connected detection means 16 operable to automatically detect when said apparatus 10 is removed from said vehicle. The position determination means 12 determines and stores said detection position of said apparatus 10, and said detection position can be displayed in the form of geographic information on said display means 14. The apparatus 10 can also, as is apparent from figure 1, comprise a to said position determination means 12 connected navigational device 18 operable to provide the closet or quickest route between at least two different positions. The apparatus 10 retrieves the detection position and a current position of said apparatus 10 from said position determination means 12 and, with the aid of said navigational device 18, provides geographic information based on said detection position and said current position. The portable apparatus 10 presents said geographic information on demand.

In a preferred embodiment of the portable apparatus 10 according to the present invention, the position determination means 12 comprises a receiver for a satellite based navigation system, and said current position are determined with the aid of said navigation system. The navigation system can e.g. be the GPS system (Global Positioning System), the Russian GLOSNASS system or the European Galileo Sat system.

Said GPS system can also comprise a reference receiver at a surveyed position. In this situation the detection position and said current position are determined with so called differential GPS to reduce the position error.

In another embodiment of said portable apparatus 10, the GPS system comprises a number of reference receivers connected in a GPS reference network (not disclosed). In this situation said positions are determined with so called network assisted GPS.

In yet another embodiment of said portable apparatus 10, the position determination means 12 comprises a PLMN transmitter and receiver (not disclosed), and said detection position and said current position are determined with the aid of at least three base stations. PLMN means Public Land Mobile Netqwork and one example of such a network is a GSM-network. Another example is a UMTS-network (Universal Mobile Telecommunications System). There exist e.g. two possible types of location calculation when using at least three base stations, known as "hyperbolic" and "circular".

In yet another embodiment of said apparatus 10, the position determination means 12 comprises a radio transmitting and receiving device (not disclosed) using low power, e.g. a Bluetooth® chip., and said detection position and said current position are determined with the aid of at least one radio base station using lower power. Bluetooth®, intended for short-range transmission, uses low power compared to telecommunication networks like GSM. In this situation the detection position and said current position are determined with the aid of at least one radio base station using low power.

In yet another embodiment of said portable apparatus 10, the position determination means 12 comprises a radio transmitting and receiving device (not disclosed), wherein said detection position and said current position are determined with the aid of a radio local area network, so called radio LAN.

In a preferred embodiment of the portable apparatus 10 according to the present invention, the detection means 16 is a mechanical detection means 16 operable to automatically detect when said apparatus 10 is removed from a cradle in said vehicle.

The portable apparatus 10 preferably comprising rechargeable batteries (not disclosed).

In another embodiment of said portable apparatus 10, the detection means 16 is an electrical detection means 16 operable to automatically detect when said apparatus 10 is removed from a cradle in said vehicle.

In yet another embodiment of said portable apparatus 10, the detection means 16 is a radio based detection means 16 operable to detect when the signal strength of a signal received from a radio transmitting means in said vehicle is below a predetermined threshold value.

The apparatus 10 according to the present invention can e.g. be in the form of a mobile telephone, a mobile communicator, a personal digital assistant, a handheld computer, a navigation equipment, or a portable computer (laptop).

The geographic information can e.g. be in the form of a route between two positions, a map with or without overlays, text-based instructions, or icons indicating turns.

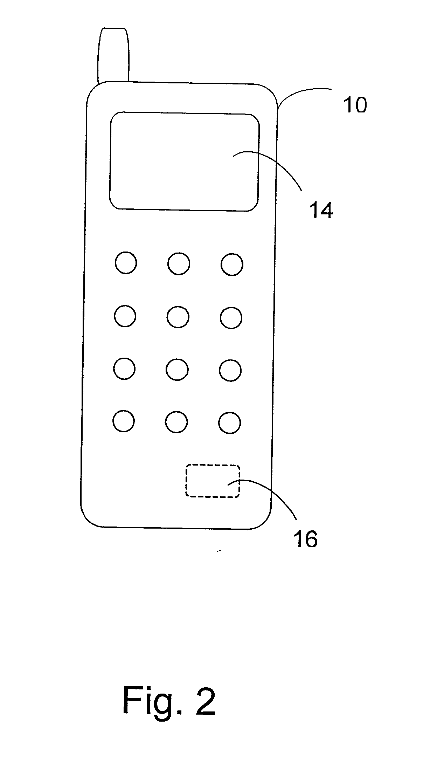

In another embodiment of said portable apparatus 10, the geographic information is presented in the form of spoken commands. In figure 2 there is disclosed the portable apparatus 10 in the form of a mobile telephone 10, with said display means 14 and said detection means 16.

The navigational device 18 can help the user to give the user the shortest or quickest routes, between the detection position and the current position. It can also be used to display maps with or without overlays. The maps can have detailed street level information or road level information for inter-town navigation. An overlay is specific information that is superimposed on the map to show the location of some places of interest for the user. Routes can be described as text based instructions (like drive 700 meters on Main street, turn right on High street), as map overlays, icons indicating turns (in the form of big arrows shown on a display indicating turns), or spoken commands (turn right on Main street in 70 meters).

As mentioned earlier, the position determination means 12 can be satellite based positioning (for instance GPS). Satellite based positioning can be enhanced and complemented with gyros, accelerometers, magnetic compasses, connection to odometer, differential GPS receivers or assistance based on cellular radio networks.

The position determination can also be based on measuring the position in relation to fixed radio transmitters on the earth. These can be cellular base stations (standardised methods based on triangulation exist (E-OTD for example)), radio LAN or short distance radio such as Bluetooth®.

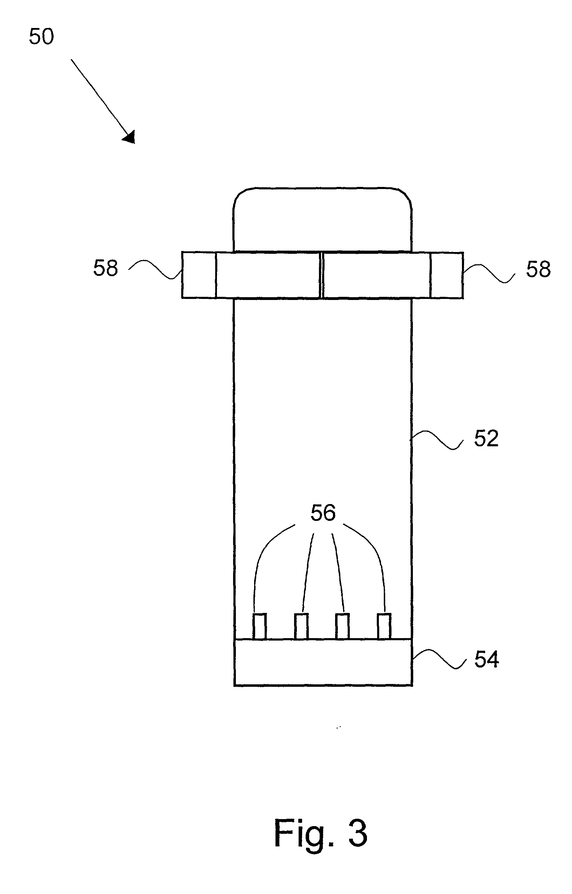

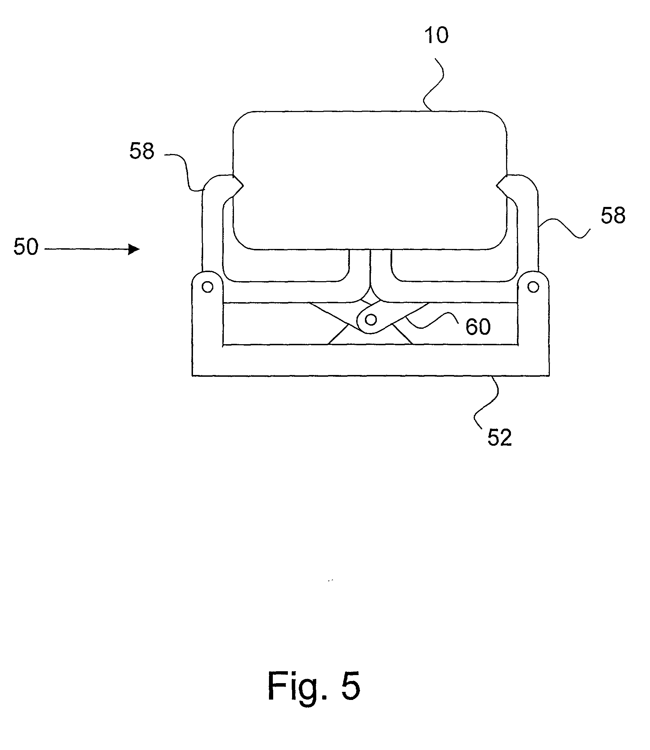

In figure 3 there is disclosed an elevational view of a cradle 50 which can be used in connection with the portable apparatus 10 disclosed in figure 2. This cradle 50 can e.g. be placed in a vehicle (not disclosed). The cradle 50 comprises a main part 52 and, in connection to this main part 52, a bottom part 54. The cradle 50 also comprises a number of contact pins 56 located in connection to said bottom part 54. In figure 3 there is disclosed four contact pins 56, but there can of course be another number of contact pins 56. The cradle 50 also comprises a pair of resilient locking means 58, intended to hold the portable apparatus 10 (see figure 5) in place in said cradle 50. The locking means 58 obtain its resilient action by the use of e.g. some sort of spring means 60 (see figure 5). When said portable apparatus 10 is placed in said cradle 50, as is disclosed in figure 5, four female contacts in said portable apparatus 50 have received and are in contact with said contact pins 56 in said cradle 50. When connected in this way the battery/batteries is/are being charged.

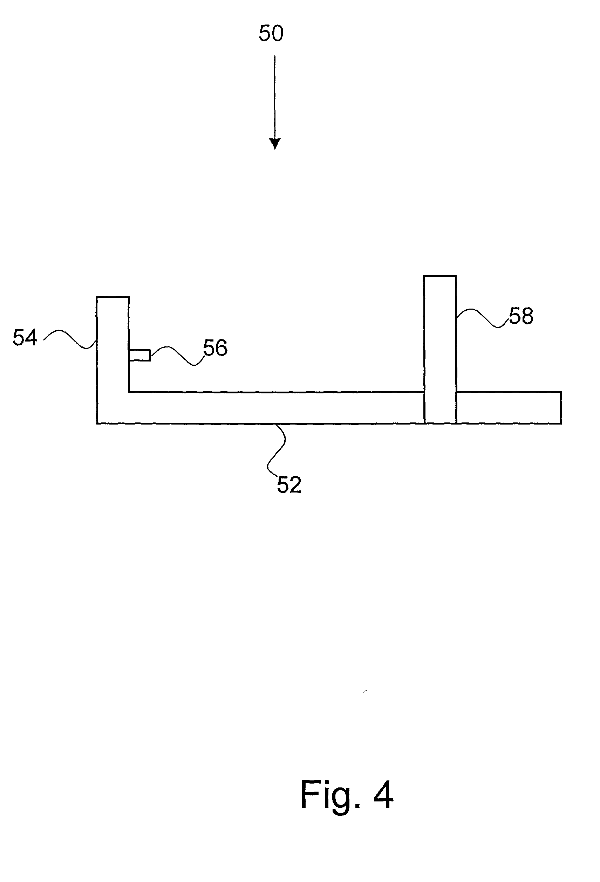

The cradle 50 disclosed in figures 3 - 5 is only one possible example of how a cradle can be designed.

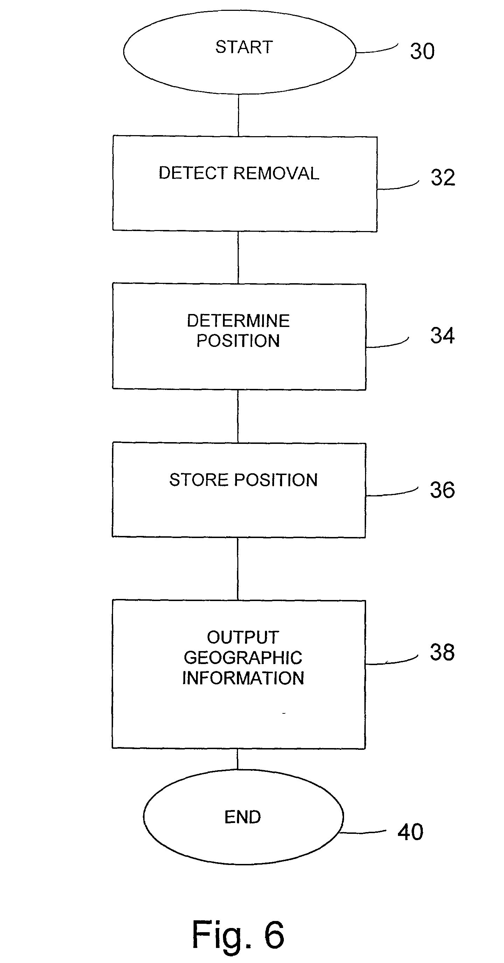

In figure 6 there is disclosed a flow chart of a method for helping a user to find e.g. a parked vehicle according to the present invention. This method is performed with the aid of a portable apparatus 10 (see figure 1). The method begins at block 30. At block 32 the method continues with the step: with the aid of said apparatus 10, to automatically detect when said apparatus 10 is removed from said vehicle. The method continues at block 34, with the aid of a position determination means 12 comprised in said apparatus 10, to determine a position of said apparatus 10 upon said detection. The next step, at block 36, consists of storing said detection position. The method continues at block 38 with the step: on demand, to provide and output geographic information based on said position. The method is completed at block 40.

In a preferred embodiment of said method it also comprises the steps of:
- to retrieve, with a navigational function comprised in said apparatus 10, said detection position and a current position of said apparatus 10 from said position determination means 12;
- with the aid of said navigational function to automatically provide geographic information based on said detection position and said current position.

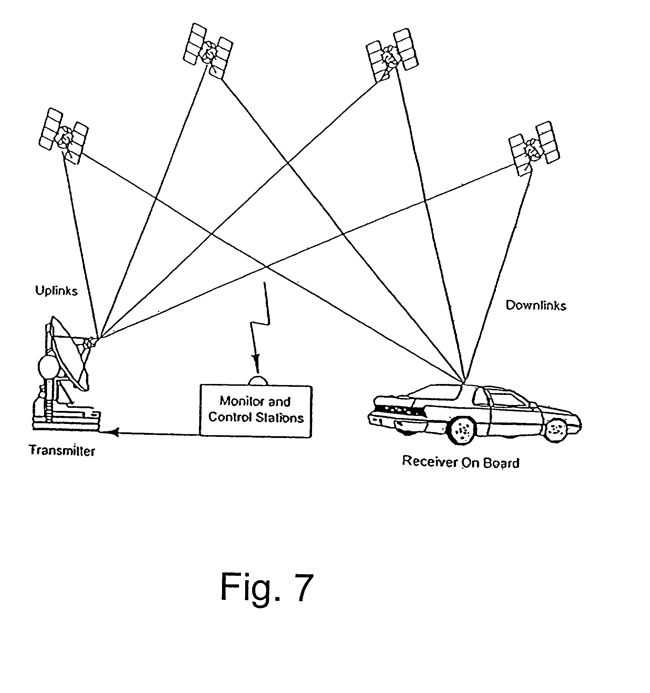

The Global Positioning System (GPS) provides a means to determine position, velocity, and time around the globe. GPS uses satellites emitting radio signals to the receiver to determine the position of the receiver, often on the surface of the Earth. A satellite system generally consists of satellites, receivers, and monitor and control stations as shown in figure 7.

The four satellites shown in figure 7 emit radio signals from space. GPS satellites transmit a direct-sequence spread-spectrum (DS-SS) signal at 1.023 Mchip/sec with a code period of one millisecond. All satellites transmit at 1575.42 MHz using code-division multiple-access (CDMA) techniques. Each satellite's DS-SS signal is modulated by a navigation message that includes accurate time and a description of the satellite's position. A GPS receiver in the vehicle, connected with an antenna, which receives the radio, signals to calculate its position. The ground network includes several monitor stations that observe the satellite signals and a master control station that uploads the data to the satellites. The GPS constellation consists of 24 satellites orbiting at an altitude of approximately 20,183.61 kilometres above the Earth's surface.

Positioning measurement of the GPS receiver is based on the time of arrival (TOA) principle. When four or more satellites are in line of sight from the receiver (or receiving antenna), the latitude, longitude, and altitude of the receiver are determined. Standard positioning service (SPS), a grade of GPS service, is available for commercial applications, including the mobile phone location determination. The SPS provides horizontal position accuracy within a circle of 100-meter radius 95 % of the time. Much better accuracy can be obtained by utilizing differential correction techniques. Differential GPS (DGPS) can reduce the position error to under 5 meters, while SA and other error factors are in effect. It uses a reference receiver at a surveyed position to send correcting information to a mobile receiver over a communications link.

As mentioned above, GPS is based on the TOA principle. A TOA system determines the position based on the intersection of the distance (or range) circles. The range is calculated from the signal transmission time, which is derived by multiplying the time by the speed of the signal. Three range measurements determine a unique position. Geometric accuracy is the highest within the triangle formed by the centres of the three circles. The accuracy gradually decreases as one moves away from the triangle. GPS uses the same principle, where the circle becomes the sphere in space and a fourth measurement is required to solve the receiver-clock offset. Because the receiver and satellite clocks are unsynchronized in prior to the measurement, the signal transmission time determined by the GPS receiver is not the true transmission time. As a result, the corresponding range measurement becomes a pseudorange measurement.

There are four main functions for a conventional GPS receiver:
1) Measuring distance from the satellites to the receiver by determining the pseudoranges (code phases);
2) Extracting the time of arrival of the signal from the contents of the satellite transmitted message;
3) Computing the position of the satellites by evaluating the ephemeris data at the indicated time of arrival;
4) Determining the position of the receiving antenna and the clock bias of the receiver by using the above data items using an iterative solution.

To reduce the errors contributed from satellite clock and position modelling ionospheric delay, tropospheric delay, and selective availability (SA), corrections can be done before the Function 4 above. The most important technique for error correction is DGPS.

The basic idea is to establish a GPS reference network (or a wide-area differential GPS network) whose receivers have clear views of the sky and can operate continuously. This reference network is also connected with the GSM network. At the request of an MS- or network-based application, the assistance data from the reference network is transmitted to the MS to increase performance of the GPS sensor. For classification, when the position is calculated at the network, we call it mobile-assisted solution. When the position is calculated at the handset, we call it mobile-based solution. If implemented properly, the assisted-GPS method should be able to:
1) Reduce the sensor start-up time;
2) Increase the sensor sensitivity; and
3) Consume less handset power than conventional GPS does.

Additional assisted data, such as differential GPS corrections, approximate handset location or cell base station location, and others can be transmitted to improve the location accuracy and decrease acquisition time.

If the GPS receiver does not know its approximate location, it will not be able to determine the visible satellites or estimate the range and Doppler frequency of these satellites. It has to search the entire code phase and frequency spaces to locate the visible satellites. For the code phase space, it spans from 0 to 1023 chips. For the frequency space, it spans from -4 kHz to + 4 kHz. The relative movements between the satellites and receiver make the search even more time-consuming. Therefore, the time-to-first-fix (TTFF) is one important parameter to evaluate the quality of a receiver. For standalone GPS, this time could be more than 10 minutes. Clearly, this is unacceptable for certain applications such as E911. By transmitting assistance data over the GSM network, we can reduce the TTFF of a receiver to a few seconds. It significantly reduces the search window of the code phase and frequency spaces, hence, the start-up time. Furthermore, because of the availability of the satellite navigation message transmitted via the cellular network, it can also assist the receiver when the satellite signals are too weak to demodulate useful information. It reduces the handset power dissipation by going to the idle mode whenever there is no need for location services.

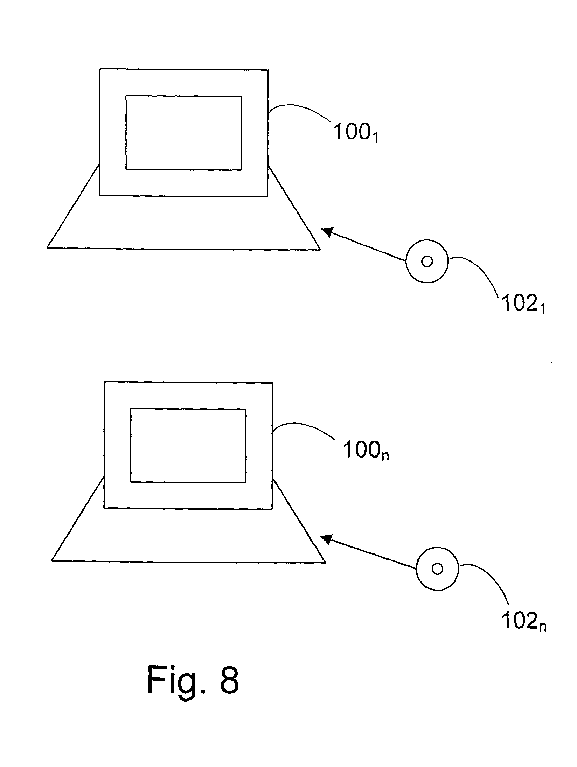

In figure 8 there is disclosed a schematic diagram of some computer program products according to the present invention. There is disclosed n different digital computers 100₁, ..., 100ₙ, wherein n is an integer. There is also disclosed n different computer program products 102₁, ..., 102ₙ, here showed in the form of compact discs. The different computer program products 102₁, ..., 102ₙ are directly loadable into the internal memory of the n different digital computers 100₁, ..., 100ₙ. Each computer program product 102₁, ..., 102ₙ comprises software code portions for performing some or all the steps of figure 3 when the product(s) 102₁ ..., 102ₙ is/are run on said computer(s) 100₁ ..., 100ₙ. Said computer program products 102₁, ..., 102ₙ can e. g. be in the form of floppy disks, RAM disks, magnetic tapes, opto magnetical disks or any other suitable products.

The invention is not limited to the embodiments described in the foregoing. It will be obvious that many different modifications are possible within the scope of the following claims.

## Claims

1. A portable apparatus (10) operable to help a user to find e.g. a parked vehicle, which apparatus (10) comprises a position determination means (12) operable to determine and store at least one position, a to said position determination means (12) connected display means (14) operable to display geographic information, **characterized in that** said apparatus (10) also comprises a to said position determination means (12) connected detection means (16) operable to automatically detect when said apparatus (10) is removed from said vehicle, whereby said position determination means (12) determines and stores said detection position of said apparatus (10), and said detection position can be displayed in the form of geographic information on said display means (14).

2. A portable apparatus (10) operable to help a user to find e.g. a parked vehicle according to Claim 1, **characterized in that** said apparatus (10) also comprises a to said position determination means (12) connected navigational device (18) operable to provide the closest or quickest route between at least two different positions, wherein said apparatus (10) retrieves the detection position and a current position of said apparatus (10) from said position determination (12), to, with the aid of said navigational device (18), provide geographic information based on said detection position and said current position.

3. A portable apparatus (10) operable to help a user to find e.g. a parked vehicle according to Claim 1 or Claim 2, **characterized in that** said position determination means (12) comprises a receiver for a satellite based navigation system, and said detectionposition and said current position are determined with the aid of said navigation system.

4. A portable apparatus (10) operable to help a user to find e.g. a parked vehicle according to Claim 3, **characterized in that** said navigation system is the Global Positioning System and said receiver is a GPS receiver.

5. A portable apparatus (10) operable to help a user to find e.g. a parked vehicle according to Claim 1 or Claim 2, **characterized in that** said position determination means (12) comprises a PLMN transmitter and receiver, and said detection position and said current position are determined with the aid of at least three base stations.

6. A portable apparatus (10) operable to help a user to find e.g. a parked vehicle according to Claim 1 or Claim 2, **characterized in that** said position determination means (12) comprises a radio transmitting and receiving device using low power, and said detection position and said current position are determined with the aid of at least one radio base station using low power.

7. A portable apparatus (10) operable to help a user to find e.g. a parked vehicle according to Claim 1 or Claim 2, **characterized in that** said position determination means (12) comprises a radio transmitting and receiving device, and said position (s) is/are determined with the aid of a radio local area network.

8. A portable apparatus (10) operable to help a user to find e.g. a parked vehicle according to anyone of the Claims 1-7, **characterized in that** said detection means (16) is a mechanical detection means (16) operable to automatically detect when said apparatus (10) is removed from a cradle in said vehicle.

9. A portable apparatus (10) operable to help a user to find e.g. a parked vehicle according to anyone of the Claims 1-7, **characterized in that** said detection means (16) is an electrical detection means (16) operable to automatically detect when said apparatus (10) is removed from a cradle in said vehicle.

10. A portable apparatus (10) operable to help a user to find e.g. a parked vehicle according to anyone of the Claims 1-7, **characterized in that** said detection means (16) is a radio based detection means (16) operable to detect when the signal strength of a signal received from a radio transmitting means in said vehicle is below a predetermined threshold value.

11. A portable apparatus (10) operable to help a user to find e.g. a parked vehicle according to anyone of the Claims 1-10, **characterized in that** said apparatus (10) is in the form of a mobile telephone, a mobile communicator, a personal digital assistant, a handheld computer, a navigation equipment, or a portable computer.

12. A portable apparatus (10) operable to help a user to find e.g. a parked vehicle according to anyone of the Claims 1-11, **characterized in that** said geographic information is displayed in the form of a route between two positions, a map with or without overlays, text based instructions, or icons indicating turns.

13. A portable apparatus (10) operable to help a user to find e.g. a parked vehicle according to anyone of the Claims 1-11, **characterized in that** said geographic information is presented in the form of spoken commands.

14. A method for helping a user to find e.g. a parked vehicle, with the aid of a portable apparatus (10), said method comprises the steps of:
- with the aid of said apparatus (10), to automatically detect when said apparatus (10) is removed from said vehicle;
- with the aid of a position determination means (12) comprised in said apparatus (10), to determine a position of said apparatus (10) upon said detection;
- to store said detection position; and
on demand, to provide and output geographic information based on said position.

15. A method for helping a user to find e.g. a parked vehicle according to Claim 14, **characterized in that** said method also comprises the steps of:
- to retrieve, with a navigational function comprised in said apparatus (10), said detection position and a current position of said apparatus (10) from said position determination means (12); and
- with the aid of said navigational function to automatically provide geographic information based on said detection position and said current position.

16. A method for helping a user to find e.g. a parked vehicle according to Claim 14 or Claim 15, **characterized in that** said position determination means (12) comprises a receiver for a satellite based navigation system, and said steps to determine said detection position and said current position are performed with the aid of said navigation system.

17. A method for helping a user to find e.g. a parked vehicle according to Claim 16, **characterized in that** said navigation system is the Global Positioning System and said receiver is a GPS receiver.

18. A method for helping a user to find e.g. a parked vehicle according to Claim 14 or Claim 15, **characterized in that** said position determination means (12) comprises a PLMN transmitter and receiver, and said steps to determine said detection position and said current position are performed with the aid of at least three base stations.

19. A method for helping a user to find e.g. a parked vehicle according to Claim 14 or Claim 15, **characterized in that** said position determination means (12) comprises a radio transmitting and receiving device using low power, and said steps to determine said detection position and said current position are performed with the aid of at least one radio base station using low power.

20. A method for helping a user to find e.g. a parked vehicle according to Claim 14 or Claim 15, **characterized in that** said position determination means (12) comprises a radio transmitting and receiving device, and said steps to determine said detection position and said current position are performed with the aid of a radio local area network.

21. A method for helping a user to find e.g. a parked vehicle according to any one of the Claims 14 -20, **characterized in that** said detection step is performed by mechanical detection when said apparatus (10) is removed from a cradle in said vehicle.

22. A method for helping a user to find e.g. a parked vehicle according to any one of the Claims 14 -20, **characterized in that** said detection step is performed by electrical detection when said apparatus (10) is removed from a cradle in said vehicle.

23. A method for helping a user to find e.g. a parked vehicle according to any one of the Claims 14 -20, **characterized in that** said detection step is performed by radio based detection, wherein the method comprises the steps of:
- to detect when the signal strength of a signal received from a radio transmitting means in said vehicle is below a predetermined threshold value.

24. A method for helping a user to find e.g. a parked vehicle according to any one of the Claims 14 -23, **characterized in that** said apparatus (10) is in the form of a mobile telephone, a mobile communicator, a personal digital assistant, a handheld computer, a navigation equipment, or a portable computer.

25. A method for helping a user to find e.g. a parked vehicle according to any one of the Claims 14 -24, **characterized in that** said geographic information is displayed in the form of a route between two positions, a map with or without overlays, text based instructions, or icons indicating turns.

26. A method for helping a user to find e.g. a parked vehicle according to any one of the Claims 14 -24, **characterized in that** said geographic information is presented in the form of spoken commands.

27. At least one computer program product (102₁,..., 102ₙ) directly loadable into the internal memory of at least one digital computer (100₁,..., 100ₙ), comprising software code portions for performing the steps of Claim 14 when said at least one product (102₁,.., 102ₙ) is/are run on said at least one computer (100₁,..., 100ₙ).
